# EUROPÄISCHE PATENTSCHRIFT

(11) **EP 1 360 586 B1**
(45) Veröffentlichungstag und Bekanntmachung des Hinweises auf die Patenterteilung: **15.12.2004**
(21) Anmeldenummer: 02704616.8
(22) Anmeldetag: 28.01.2002
(51) Int. Cl.: G06F 11/00

(54) **VERFAHREN UND VORRICHTUNG ZUR DATENÜBERTRAGUNG MIT WÄHLBAREN VERFÜGBARKEITSMODI**
METHOD AND DEVICE FOR DATA TRANSMISSION WITH SELECTABLE AVAILIBILITY MODES
PROCEDE ET DISPOSITIF DE TRANSMISSION DE DONNEES

(30) Priorität: 08.02.2001 DE 10105707
(43) Veröffentlichungstag der Anmeldung: 12.11.2003
(73) Patentinhaber: Siemens Aktiengesellschaft, 80333 München (DE)
(72) Erfinder: WEBER, Karl, 90518 Altdorf (DE); BARTHEL, Herbert, 91074 Herzogenaurach (DE); KREMER, Karl-Theo, 91325 Adelsdorf (DE); STROMBERGER, Rudolf, 91177 Thalmässing (DE); LECHTERMANN, Jürgen, 48165 Münster (DE)
(86) Internationale Anmeldenummer: PCT/DE2002/000294
(87) Internationale Veröffentlichungsnummer: WO 2002/063472

(56) Entgegenhaltungen:
- WO-A-90/09633
- DE-A- 3 328 405
- US-A- 4 974 150

## Beschreibung

Die Erfindung betrifft ein Verfahren und eine Vorrichtung zur Datenübertragung, z.B. in einem redundant ausgeführten Computersystem, insbesondere in einem hochverfügbaren System.

Üblicherweise werden Redundanzkonzepte von Automatisierungs- oder Computersystemen im Hinblick auf ihre Verfügbarkeit und Aufteilung der Redundanzknoten unterschieden nach Medienredundanz oder Systemredundanz. Unter Medienredundanz wird die redundante Ausführung von Übertragungseinheiten zur Steigerung der Verfügbarkeit der Übertragungseinheiten zwischen zwei kommunizierenden Datenverarbeitungseinheiten verstanden. Die Medienredundanz, bei der in der Art vergleichsweise enger Redundanzknoten jeweils ein Redundanzknoten für das Medium und einer für die Sendestation vorgesehen ist, wird insbesondere verwendet für zuverlässigkeitsrelevante Automatisierungs- oder Steuerungssysteme von Anlagen, bei denen ein Ausfall der Datenkommunikation zu kritischen Situationen in der Anlage führen kann. Medienredundante Systeme sind gegenüber Rückwirkungen in miteinander verbundenen Systemen unempfindlich. Nachteilig dabei ist, dass die miteinander verbundenen Systeme im einzelnen nicht oder nur sehr begrenzt hinsichtlich eines Fehlers diagnostiziert werden können. Darüber hinaus führt ein Ausfall zu einer erheblichen Reduzierung der Verfügbarkeit des Systems und erheblichen Erhöhung der Reaktionszeiten im System.

Demgegenüber wird bei der Systemredundanz, bei der in der Art vergleichsweise weiterer Redundanzknoten lediglich ein einziger Redundanzknoten für ein Gesamtsystem vorgesehen sein kann, die Verfügbarkeit des gesamten Computersystems erhöht, indem insbesondere die zuverlässigkeitsrelevanten Datenverarbeitungseinheiten und andere Komponenten, wie z.B. dezentrale Steuerungen, Drucker, redundant ausgeführt sind. Üblicherweise werden dabei insbesondere die zentralen Steuerung sowie sicherheitsrelevante Ein-, Ausgabe-Baugruppen redundant ausgeführt. Durch eine derartige weitgehend das ganze System betreffende Redundanz ist eine besonders hohe Verfügbarkeit gegeben, wobei einzelne Fehler gezielt diagnostiziert werden können.

Für medienredundante Systeme sind üblicherweise sogenannte Vorschaltgeräte vorgesehen, die von einer einkanaligen Steuerung oder Datenverarbeitungseinheit eine zweikanalige oder mehrfach redundante Datenübertragung ermöglichen. Eine Umschaltung oder Kombination von Medienredundanz und Systemredundanz ist derzeit nicht möglich.

Aus der WO90/09633 ist bekannt, Rechner zweikanalig redundant miteinander verkehren zu lassen, wobei eine Störung auf einem der Kanäle dazu führt, dass der Datenverkehr einkanelig fortgeführt wird.

Der Erfindung liegt daher die Aufgabe zugrunde, ein Verfahren gemäß Anspruch 1 und eine Vorrichtung gemäß Anspruch 7 zur Datenübertragung zwischen miteinander kommunizierenden Datenverarbeitungseinheiten in einem vernetzten System anzugeben, bei dem eine möglichst hohe Ausnutzung der gegebenen Kommunikationsressourcen ermöglicht ist.

Die erstgenannte Aufgabe wird erfindungsgemäß gelöst durch ein Verfahren zur Datenübertragung in einem redundant ausgeführten Automatisierungssystem umfassend eine Anzahl von Datenübertragungseinheiten und eine Anzahl von Datenverarbeitungseinheiten, bei dem ein die Datenübertragung charakterisierender Datenfluss auf den betreffenden Datenübertragungseinheiten fortlaufend überwacht und in Abhängigkeit vom Datenfluss zwischen verschiedenen Betriebsarten derart umgeschaltet wird, dass bei Vorliegen eines synchronisierten Datenflusses auf mindestens zwei Datenübertragungseinheiten eine Betriebsart eingestellt wird, die gegenüber einer Betriebsart bei einem fehlerhaften Datenfluss auf einer der Datenübertragungseinheiten eine höhere Verfügbarkeit aufweist.

Durch eine derartige den jeweiligen Datenfluss auf den betreffenden Datenübertragungseinheiten sowie die hardwaremäßig verfügbaren Redundanzen der Datenübertragungseinheiten berücksichtigenden Einstellung der Betriebsart ist eine Kombination oder Umschaltung von verschiedenen Verfügbarkeitsstufen der redundanten Datenübertragungseinheiten und somit des redundanten Automatisierungssystems gegeben.

Zweckmäßigerweise wird der nachfolgende Datenfluss in Abhängigkeit von der eingestellten Betriebsart über eine der Datenübertragungseinheit oder über mehrere Datenübertragungseinheiten ausgeführt. Hierdurch ist sowohl eine besonders fehlerfreie als auch hochverfügbare Datenübertragung ermöglicht. Bei einer hochverfügbaren Datenübertragung - d.h. redundanten Datenübertragung über mehrere Datenübertragungseinheiten weitgehend gleichzeitig - werden die betreffenden Datenübertragungseinheiten synchronisiert. Die die hochverfügbare Datenübertragung charakterisierende Betriebsart wird im weiteren medienredundante Betriebsart genannt.

Zur Vermeidung von Rückkopplungen bei fehlerbehafteten Datenverarbeitungseinheiten wird vorzugsweise in Abhängigkeit vom Zustand einer der Datenverarbeitungseinheiten eine vorgegebene Betriebsart eingestellt. Hierdurch ist ein rückwirkungsfreier Austausch von Daten über die Datenübertragungseinheiten ermöglicht.

Für einen besonders fehlerfreien Datenaustausch wird in Abhängigkeit von der eingestellten Betriebsart eine der Datenübertragungseinheiten als Vorzugskanal und eine weitere Datenübertragungseinheit als Reservekanal definiert und eingestellt. Beispielsweise wird bei einem ungleichen Empfang von Daten über mehrere Datenübertragungseinheiten die Datenübertragungseinheit mit einem fehlerfreien Datenfluss als Vorzugskanal und die Datenübertragungseinheit mit fehlerbehaftetem Datenfluss als Reservekanal definiert. Alternativ wird die Datenübertragungseinheit, mittels der prozess- und/oder sicherheitsrelevante Daten übertragen werden, als Vorzugskanal definiert. Demgegenüber wird die Datenübertragungseinheit, mittels der diagnose- und/oder verwaltungsrelevante Daten übertragen werden, als Reservekanal definiert. Diese Betriebsart, bei der die Datenübertragungseinheiten für unterschiedliche Datenflüsse ausgelegt werden, wird im weiteren systemredundante Betriebsart genannt.

Für eine einen hohen Zuverlässigkeitsstandard gewährleistende Datenübertragung, bei der ein- und dieselben Daten parallel über mehrere Datenübertragungseinheiten ausgetauscht werden, wird zweckmäßigerweise die Betriebsart mit hoher Verfügbarkeit eingestellt, bei der der Datenfluss über alle betreffenden Datenübertragungseinheiten fortlaufend überwacht wird. Somit ist gewährleistet, dass ein Ausfall eines einzelnen Datenübertragungskanals schnellstmöglich detektiert wird. Durch eine derartige Leitungsdiagnosefunktion ist eine vorbeugende Erkennung und Wartung der Kanäle ermöglicht. Insbesondere kann bei fehlerbehaftetem oder einseitigem, einkanaligem Empfang unmittelbar auf die systemredundante Betriebsart umgeschaltet werden.

Die zweitgenannte Aufgabe wird erfindungsgemäß gelöst durch eine Vorrichtung zur Datenübertragung in einem redundant ausgeführten Automatisierungssystem umfassend eine Anzahl von Datenverarbeitungseinheiten, die über eine Anzahl von Datenübertragungseinheiten miteinander verbunden sind, wobei mindestens eine Datenverarbeitungseinheit ein Redundanzmodul zur Überwachung eines die Datenübertragung charakterisierenden Datenflusses umfasst, wobei in Abhängigkeit vom Datenfluss mittels des Redundanzmoduls eine von mehreren Betriebsarten derart einstellbar ist, dass bei Vorliegen eines synchronisierten Datenflusses auf mindestens zwei Datenübertragungseinheiten eine Betriebsart einstellbar ist, die gegenüber einer Betriebsart bei einem einseitigen Datenfluss auf einem der Datenübertragungseinheiten eine höhere Verfügbarkeit aufweist. Das Redundanzmodul dient dabei der automatisch gesteuerten Umschaltung von einer Betriebsart in eine andere Betriebsart unter Ausnutzung der vorhandenen Datenübertragungsarten hardware- und/oder softwaremäßig. D.h. es sind mehrere Datenübertragungseinheiten vorgesehen und wird anhand der Diagnose eine fehlerfreie Datenübertragung identifiziert, dann wird das System mittels des Redundanzmoduls in eine möglichst hochverfügbare Betriebsart - medienredundante Betriebsart - umgeschaltet, bei welcher ein- und dieselben Daten über mehrere Datenübertragungseinheiten parallel und annähernd gleichzeitig und somit redundant übertragen werden. Dazu werden die Datenübertragungseinheiten synchronisiert.

Die mit der Erfindung erzielten Vorteile bestehen insbesondere darin, dass in Abhängigkeit von der Qualität des Datenflusses auf den Datenübertragungseinheiten sowie in Abhängigkeit von der Anzahl, der Art und der Funktion der Datenübertragungseinheiten und/oder der Datenverarbeitungseinheiten verschiedene Betriebsarten automatisch eingestellt werden, die hinsichtlich der Verfügbarkeit oder Redundanz abgestuft sind. Unabhängig von der Qualität des Datenflusses ist dabei im überlagerten System eine optimale Anpassung sichergestellt. Somit ist aufgrund der fortlaufenden Überwachung eine schnelle Diagnose sowie eine hinsichtlich der aktuellen Hardwareressourcen und/oder der aktuellen Kommunikationsressourcen optimierte Datenübertragung ermöglicht.

Ausführungsbeispiele der Erfindung werden anhand einer Zeichnung näher erläutert.

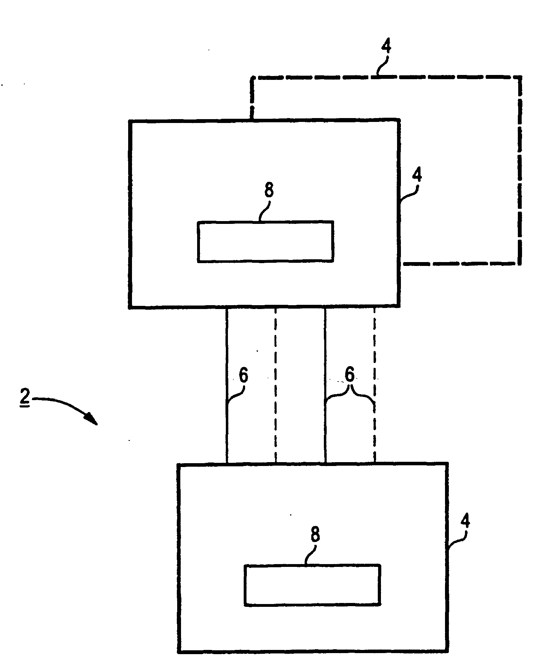

Die Figur zeigt eine Vorrichtung zur Datenübertragung in einem redundant ausgeführten Automatisierungssystem 2. Das Automatisierungssystem 2 ist beispielsweise eine speicherprogrammierbare Steuerung oder ein vernetztes Computersystem. Das Automatisierungssystem 2 umfasst eine Anzahl von Datenverarbeitungseinheiten 4, die über eine Anzahl von Datenübertragungseinheiten 6 miteinander verbunden sind. Je nach Art und Ausführung des Automatisierungssystems 2 sind die Datenverarbeitungseinheiten 4 und/oder die Datenübertragungseinheiten 6 einfach, einfach redundant und/oder mehrfach redundant ausgeführt. In der Figur ist eine der zwei Datenverarbeitungseinheiten 4 mit einer einfachen Redundanz dargestellt. Die andere Datenverarbeitungseinheit 4 (in der Figur die untere) ist einfach aufgebaut. Die beiden Datenverarbeitungseinheiten 4 sind über zwei Datenübertragungseinheiten 6, die redundant ausgeführt sind, miteinander verbunden.

Die Datenverarbeitungseinheiten 4 weisen zur Überwachung eines die Datenübertragung charakterisierenden Datenflusses jeweils ein Redundanzmodul 8 auf. Mittels des Redundanzmoduls 8 wird in Abhängigkeit vom ermittelten Datenfluss eine von mehreren Betriebsarten derart eingestellt, dass bei Vorliegen eines synchronisierten Datenflusses auf den beiden Datenübertragungseinheiten 6 eine Betriebsart einstellbar ist, die gegenüber einer Betriebsart mit einem fehlerhaften Datenfluss auf einem der Datenübertragungseinheiten 6 eine höhere Verfügbarkeit aufweist. Diese hochverfügbare Betriebsart bei synchronisierten Datenfluss wird auch medienredundante Betriebsart genannt.

In der Grundstellung des empfangsseitigen Redundanzmoduls 8 wartet dieses auf Daten von beiden Datenübertragungseinheiten 6. Je nach Art des Datenflusses wird eine betreffende Betriebsart eingestellt. Für den Fall, dass unterschiedliche Daten mittels der beiden Datenübertragungseinheiten 6 oder fehlerhafte Daten von einer der beiden Datenübertragungseinheiten 6 empfangen werden, wird eine der Datenübertragungseinheiten 6 als Vorzugskanal eingestellt. Diese Betriebsart wird systemredundante Betriebsart genannt.

Dabei erfolgt die Auswahl des Vorzugskanals mittels des Redundanzmoduls 8 anhand der für die betreffende Datenverarbeitungseinheit 4 vorgegebenen bevorzugten Datenübertragungseinheit 6. Die andere Datenübertragungseinheit 6 wird als Reservekanal definiert.

Nach Empfang der Daten wird anhand einer Fehlerstatistik für die jeweilige Datenübertragungseinheit 6 mittels des Redundanzmoduls 8 diejenige als Vorzugskanal definiert und eingestellt, die die wenigsten Fehler bei der Datenübertragung in der Vergangenheit aufweist. Der betreffenden Datenverarbeitungseinheit 4 wird angezeigt, über welche Datenübertragungseinheit 6 der Datenfluss ausgeführt wird. Dabei erfolgt im systemredundanten Betrieb mittels der als Vorzugskanal definierten Datenübertragungseinheit 6 der anwendungs- und/oder funktionsspezifische Datenverkehr. Die als Reservekanal eingestellte Ubertragungseinheit 6 dient lediglich für den auskunfts- und/oder verwaltungsrelevanten Datenverkehr.

Für den Fall, dass die Daten auf beiden Datenübertragungseinheiten 6 gleich sind, werden beim Empfang der Daten in der Grundstellung des Redundanzmoduls 8 die beiden Datenübertragungseinheiten 6 synchronisiert. Die Synchronisation entspricht dabei in etwa einem zwischen den beiden Datenübertragungseinheiten 6 maximal zulässigen Zeitbereichs (= Delay) für die redundante Übertragung ein- und derselben Daten. Falls dies nicht innerhalb des Zeitbereichs (auch Synchronisationsfenster genannt) ausgeführt wird, wird mittels des Redundanzmoduls 8 anhand der Qualität und Funktion der jeweiligen Datenübertragungseinheit 6 eine als Vorzugskanal definiert und eingestellt.

Bei gelungener Synchronisation wird mittels des Redundanzmoduls 8 in die medienredundante Betriebsart umgeschaltet. Der nachfolgende Datenfluss über die Datenübertragungseinheiten 6 wird in der medienredundanten Betriebsart fortlaufend überwacht, indem die von den beiden Datenübertragungseinheiten 6 empfangenen Daten miteinander verglichen werden. Darüber hinaus werden die einzelnen Daten auf Fehler überprüft und nur fehlerfreie Daten oder Telegramme mittels der betreffenden Datenverarbeitungseinheit 4 verarbeitet. Bei Gleichheit der Daten bleiben die Datenübertragungseinheiten 6 aktiv geschaltet und somit auch die medienredundante Betriebsart. Bei Ungleichheit der Daten ohne Fehler, d.h. wenn innerhalb eines Zeitbereichs oder Intervalls eine Anzahl von n unsymmetrischen Daten oder Telegrammen empfangen werden, wird automatisch die medienredundante Betriebsart ausgeschaltet. In Abhängigkeit von der Anzahl der verfügbaren Datenübertragungseinheiten 6 wird in eine Betriebsart umgeschaltet, die gegenüber der medienredundanten Betriebsart eine niedrigere Verfügbarkeit aufweist, z.B. wird in die systemredundante Betriebsart mit einer Datenübertragung über einen einzelnen oder mehrere Vorzugskanäle geschaltet.

Je nach Art und Ausführung des Automatisierungssystems 2 ist für jede Datenübertragungseinheit 6 mittels des Redundanzmoduls 8 ein Statistikzähler zur Erfassung der Anzahl von fehlerhaften Telegrammen oder fehlerhaften Datenübertragungen vorgesehen. Bei Automatisierungssystemen 2 mit besonders hohen Zuverlässigkeitsstandards, z.B. bei Steuerungen für Kraftwerke oder chemische Anlagen, wird zur Erhöhung der Zuverlässigkeit jede Datenübertragungseinheit 6 8-fach abgetastet und entsprechend bewertet und diagnostiziert. Anhand der Fehlerstatistik kann darüber hinaus in einfacher Art und Weise eine der Datenübertragungseinheiten 6 als Vorzugskanal für die Datenübertragung definiert werden. Durch eine zusätzliche Diagnose- Funktion mittels des Redundanzmoduls 8 sind fehlerhafte Datenflüsse rechtzeitig erkennbar, so dass eine vorbeugende Wartung ermöglicht ist.

## Patentansprüche

1. Verfahren zur Datenübertragung in einem redundant ausgeführten Automatisierungssystem (2) umfassend eine Anzahl von Datenübertragungseinheiten (6) und eine Anzahl von Datenverarbeitungseinheiten (4), bei dem ein die Datenübertragung charakterisierender Datenfluss auf den betreffenden Datenübertragungseinheiten (6) fortlaufend überwacht und in Abhängigkeit vom Datenfluss zwischen verschiedenen Betriebsarten derart umgeschaltet wird, dass bei Vorliegen eines synchronisierten Datenflusses auf mindestens zwei Datenübertragungseinheiten (6) eine zweite Betriebsart eingeschaltet wird, die gegenüber einer ersten Betriebsart eine höhere Verfügbarkeit aufweist, **dadurch gekennzeichnet, dass** bei einem ungleichen Empfang von Daten über mehrere Datenübertragungseinheiten (6) die erste Betriebsart eingeschaltet wird, bei der die Datenübertragungseinheiten (6) für unterschiedlichen Datenverkehr und somit unterschiedliche Datenflüsse ausgelegt werden.

2. Verfahren nach Anspruch 1, bei dem in Abhängigkeit von der eingeschalteten Betriebsart der nachfolgende Datenfluss über eine der Datenübertragungseinheiten (6) oder über mehrere Datenübertragungseinheiten (6) ausgeführt wird.

3. Verfahren nach Anspruch 1 oder 2, bei dem in Abhängigkeit vom Zustand einer der Datenverarbeitungseinheiten (4) eine vorgegebene Betriebsart eingeschaltet wird.

4. Verfahren nach einem der Ansprüche 1 bis 3, bei dem in Abhängigkeit von der eingeschalteten Betriebsart eine der Datenübertragungseinheiten (6) als Vorzugskanal und eine weitere Datenübertragungseinheit (6) als Reservekanal definiert wird.

5. Verfahren nach einem der Ansprüche 1 bis 4, bei dem bei der zweiten Betriebsart mit hoher Verfügbarkeit der Datenfluss über alle betreffenden Datenübertragungseinheiten (6) fortlaufend überwacht wird.

6. Verfahren nach Anspruch 4, bei dem nach Empfang der Daten anhand einer Fehlerstatistik für die jeweilige Datenübertragungseinheit (6) diejenige als Vorzugskanal definiert und eingeschaltet wird, die die wenigsten Fehler bei der Datenübertragung in der Vergangenheit aufweist.

7. Vorrichtung (1) zur Datenübertragung in einem redundant ausgeführten Automatisierungssystem (2) umfassend eine Anzahl von Datenverarbeitungseinheiten (4), die über eine Anzahl von Datenübertragungseinheiten (6) miteinander verbunden sind, wobei mindestens eine Datenverarbeitungseinheit (4) ein Redundanzmodul (8) zur Überwachung eines die Datenübertragung charakterisierenden Datenflusses umfasst, wobei in Abhängigkeit vom Datenfluss mittels des Redundanzmoduls eine von mehreren Betriebsarten derart umschaltbar ist, dass bei Vorliegen eines synchronisierten Datenflusses auf mindestens zwei Datenübertragungseinheiten (6) eine zweite Betriebsart eingeschaltet wird, die gegenüber einer ersten Betriebsart eine höhere Verfügbarkeit aufweist, **dadurch gekennzeichnet, dass** bei einem ungleichen Empfang von Daten über mehrere Datenübertragungseinheiten (6) die erste Betriebsart eingeschaltet wird, bei der die Datenübertragungseinheiten für unterschiedlichen Datenverkehr und somit unterschiedliche Datenflüsse ausgelegt werden.

8. Vorrichtung nach Anspruch 7, wobei der in Abhängigkeit von der eingeschalteten Betriebsart der nachfolgende Datenfluss über eine der Datenübertragungseinheiten (6) oder über mehrere Datenübertragungseinheiten (6) ausführbar ist.

9. Vorrichtung nach Anspruch 7 oder 8, wobei in Abhängigkeit vom Zustand einer der Datenverarbeitungseinheiten (4) eine vorgegebene Betriebsart einschaltbar ist.

10. Vorrichtung nach einem der Ansprüche 7 bis 9, wobei in Abhängigkeit von der eingeschalteten Betriebsart eine der Datenübertragungseinheiten (6) als Vorzugskanal und eine weitere Datenübertragungseinheit (6) als Reservekanal definierbar ist.

11. Vorrichtung nach einem der Ansprüche 7 bis 10, bei der bei der zweiten Betriebsart mit hoher Verfügbarkeit der Datenfluss über alle betreffenden Datenübertragungseinheiten (6) fortlaufend überwachbar ist.

12. Vorrichtung nach einem der Ansprüche 7 bis 11, bei der mittels des Redundanzmoduls (8) nach Empfang der Daten anhand einer Fehlerstatistik für die jeweilige Datenübertragungseinheit (6) diejenige als Vorzugskanal definierbar und einschaltbar ist, die die wenigsten Fehler bei der Datenübertragung in der Vergangenheit aufweist.

## Claims

1. Method for transmitting data in a redundant automation system (2), comprising a number of data transmission units (6) and a number of data processing units (4), in which a data flow which characterizes the data transmission is continuously monitored on the respective data transmission units (6) and, as a function of the data flow, switching over is performed between different operating modes in such a way that, when a synchronized data flow is present on at least two data transmission units (6), a second operating mode is activated which has a higher availability compared to the first operating mode, **characterized in that**, for an uneven receipt of data via a number of data transmission units (6) the first operating mode is activated, in which the data transmission units (6) are arranged for different data traffic and thereby for different data flows.

2. Method in accordance with Claim 1, in which the subsequent data flow is implemented via one of the data transmission units (6) or via a plurality of data transmission units (6) as a function of the operating mode which is activated.

3. Method in accordance with Claim 1 or 2, in which a predefined operating mode is activated as a function of the state of one of the data processing units (4).

4. Method in accordance with one of Claims 1 to 3, in which one of the data transmission units (6) is defined as a priority channel and a further data transmission unit (6) is defined as a backup channel, as a function of the operating mode which is activated.

5. Method in accordance with one of the Claims 1 to 4, in which the data flow via all the respective data transmission units (6) is continuously monitored in the second operating mode with high availability.

6. Method in accordance with Claim 4, in which, after data has been received on the basis of error statistics for the relevant data transmission unit (6), the channel defined and activated as preferred channel is the one which has featured the fewest errors in the past on data transmission.

7. A device (1) for transmitting data in a redundant automation system (2), comprising a number of data processing units (4) which are connected to one another via a number of data transmission units (6), at least one data processing unit (4) comprising a redundancy module (8) for monitoring a data flow which characterizes the data transmission, one of a plurality of operating modes being capable of being activated as a function of the data flow by means of the redundancy module, in such a way that when a synchronized data flow is present on at least two data transmission units (6), a second operating mode is activated which has a higher availability compared to the first operating mode, **characterized in that**, for an uneven receipt of data via a number of data transmission units (6) the first operating mode is activated, in which the data transmission units (6) are arranged for different data traffic and thereby for different data flows.

8. Device in accordance with Claim 7, in which the subsequent data flow is implemented via one of the data transmission units (6) or via a plurality of data transmission units (6) as a function of the operating mode which is activated.

9. Device in accordance with Claim 7 or 8, in which a predefined operating mode is activated as a function of the state of one of the data processing units (4).

10. Device in accordance with one of Claims 7 to 9, in which one of the data transmission units (6) is defined as a priority channel and a further data transmission unit (6) is defined as a backup channel, as a function of the operating mode which is activated.

11. Device in accordance with one of the Claims 7 to 10, in which the data flow via all the respective data transmission units (6) is continuously monitored in the second operating mode with high availability.

12. Method in accordance with one of the Claims 7 to 11, in which, after data has been received on the basis of error statistics for the relevant data transmission unit (6), the channel defined and activated as preferred channel is the one which has featured the fewest errors in the past on data transmission.

## Revendications

1. Procédé de transmission de données dans un système d'automatisation redondant (2) comprenant un certain nombre d'unités de transmission de données (6) et un certain nombre d'unité de traitement de données (4), un flux de données caractérisant la transmission de données sur les unités de transmission de données concernées (6) étant surveillé en permanence et une commutation étant effectuée en fonction du flux de données entre différents modes d'exploitation de telle sorte que, en présence d'un flux de données synchronisé sur au moins deux unités de transmission de données (6), on enclenche un deuxième mode d'exploitation qui présente une plus grande disponibilité par rapport à un premier mode d'exploitation, **caractérisé par le fait que**, en cas de réception inégale de données par l'intermédiaire de plusieurs unités de transmission de données (6), on enclenche le premier mode d'exploitation dans lequel les unités de transmission de données (6) sont conçues pour des trafics de données différents et donc pour des flux de données différents.

2. Procédé selon la revendication 1, dans lequel, en fonction du mode d'exploitation enclenché, on réalise le flux de données suivant par l'intermédiaire de l'une des unités de transmission de données (6) ou par l'intermédiaire de plusieurs unités de transmission de données (6).

3. Procédé selon la revendication 1 ou 2, dans lequel, en fonction de l'état de l'une des unités de traitement de données (4), on enclenche un mode d'exploitation prédéterminé.

4. Procédé selon l'une des revendications 1 à 3, dans lequel, en fonction du mode d'exploitation enclenché, on définit l'une des unités de transmission de données (6) comme canal préféré et une autre unité de transmission de données (6) comme canal de réserve.

5. Procédé selon l'une des revendications 1 à 4, dans lequel, dans le deuxième mode d'exploitation à haute disponibilité, on surveille en permanence le flux de données sur toutes les unités de transmission de données (6).

6. Procédé selon la revendication 4, dans lequel, après la réception des données et à l'aide de statistiques d'erreurs pour l'unité de transmission de données (6) considérée, on définit et enclenche comme canal préféré celle des unités qui présentait le moins d'erreurs lors de la transmission de données dans le passé.

7. Dispositif (1) de transmission de données dans un système d'automatisation redondant (2) comprenant un certain nombre d'unités de traitement de données (4) qui sont reliées entre elles par l'intermédiaire d'un certain nombre d'unités de transmission de données (6), au moins une unité de traitement de données (4) comprenant un module de redondance (8) pour la surveillance d'un flux de données caractérisant la transmission de données et un mode d'exploitation parmi plusieurs pouvant être commuté en fonction du flux de données au moyen du module de redondance de telle sorte que, en présence d'un flux de données, synchronisé sur au moins deux unités de transmission de données (6), on peut enclencher un deuxième mode d'exploitation qui présente une plus grande disponibilité par rapport à un premier mode d'exploitation, **caractérisé par le fait que**, en cas de réception inégale de données par l'intermédiaire de plusieurs unités de transmission de données (6), on enclenche le premier mode d'exploitation dans lequel les unités de transmission de données sont conçues pour des trafics de données différents et donc pour des flux de données différents.

8. Dispositif selon la revendication 7, dans lequel, en fonction du mode d'exploitation enclenché, le flux de données suivant peut être réalisé par l'intermédiaire de l'une des unités de transmission de données (6) ou par l'intermédiaire de plusieurs unités de transmission de données (6).

9. Dispositif selon la revendication 7 ou 8, dans lequel, en fonction de l'état de l'une des unités de traitement de données (4), un mode d'exploitation prédéterminé peut être enclenché.

10. Dispositif selon l'une des revendications 7 à 9, dans lequel, en fonction du mode d'exploitation enclenché, l'une des unités de transmission de données (6) est définie comme canal préféré et une autre unité de transmission de données (6) est définie comme canal de réserve.

11. Dispositif selon l'une des revendications 7 à 10, dans lequel, dans le deuxième mode d'exploitation à haute disponibilité, le flux de données sur toutes les unités de transmission de données (6) peut être surveillé en permanence.

12. Dispositif selon l'une des revendications 7 à 11, dans lequel, au moyen du module de redondance (8), après la réception des données et à l'aide de statistiques d'erreurs pour l'unité de transmission de données (6) considérée, on peut définir et enclencher comme canal préféré celle des unités qui présentait le moins d'erreurs lors de la transmission de données dans le passé.
